# EUROPEAN PATENT APPLICATION

(11) **EP 4 546 465 A1**
(43) Date of publication of application: **30.04.2025**
(21) Application number: 22948580.0
(22) Date of filing: 30.06.2022
(51) Int. Cl.: H01M 4/62, H01M 4/1391, H01M 4/1397, H01M 4/485

(54) **ELECTROCHEMICAL DEVICE AND ELECTRONIC DEVICE COMPRISING SAME**

(71) Applicant: Ningde Amperex Technology Limited, Ningde, Fujian 352100 (CN)
(72) Inventor: ZHOU, Juan, Ningde, Fujian 352100 (CN); LANG, Ye, Ningde, Fujian 352100 (CN); YUAN, Guoxia, Ningde, Fujian 352100 (CN); XU, Leimin, Ningde, Fujian 352100 (CN)
(74) Representative: Icosa
(86) International application number: PCT/CN2022/103000
(87) International publication number: WO 2024/000477

(57) **Abstract**

This application relates to an electrochemical device, including a positive electrode plate, a negative electrode plate, and an electrolyte. The positive electrode plate includes a positive electrode active layer, the positive electrode active layer includes a positive electrode active material, and the positive electrode active material includes an additive. During charge/discharge the electrochemical device, when the electrochemical device is in a fully discharged state, an X-ray diffraction pattern of the positive electrode plate has a characteristic diffraction peak 1 at a diffraction angle 2θ ranging from 17.5° to 19.5°, and the additive includes manganese element. This application can significantly increase a charge-discharge capacity of the positive electrode active material and improve the cycling performance and high-temperature storage performance of the electrochemical device.

## Description

### TECHNICAL FIELD

This application relates to the field of energy storage, and in particular to, an electrochemical device and an electronic device including such electrochemical device.

### BACKGROUND

The electrochemical device such as the lithium-ion battery gains increasing market share year by year due to advantages of light weight and a high energy density. With the rapid development of new energy vehicles and the energy storage field, it is demanded that the positive electrode active material such as lithium manganese oxide has a higher charge-discharge capacity, and the electrochemical device has better cycling performance and storage performance.

### SUMMARY

According to an aspect of this application, this application relates to an electrochemical device, including a positive electrode plate, a negative electrode plate, and an electrolyte. The positive electrode plate includes a positive electrode active layer, the positive electrode active layer includes a positive electrode active material, and the positive electrode active material includes an additive. During charge/discharge of the electrochemical device, when the electrochemical device is in a fully discharged state, an X-ray diffraction pattern of the positive electrode plate has a characteristic diffraction peak 1 at a diffraction angle 2θ ranging from 17.5° to 19.5°, and the additive includes manganese element. The additive can replenish lithium ions consumed for forming a cathode-electrolyte interface (CEI) film during the initial charge of the positive electrode active material, providing a diffusion pathway for the lithium ions, and facilitating quick intercalation and deintercalation of lithium ions. And the additive has a low voltage platform, helping the lithium ions to slowly intercalate back during cycling and storage, thereby increasing the charge-discharge capacity of the positive electrode active material, and significantly improving the cycling performance and high-temperature storage performance of the electrochemical device.

In some embodiments, the positive electrode active material includes lithium manganese oxide.

In some embodiments, when the electrochemical device is in the fully discharged state, the X-ray diffraction pattern of the positive electrode plate further has a characteristic diffraction peak 2 at the diffraction angle 2θ ranging from 17.5° to 19.5°.

In some embodiments, a peak position difference between the characteristic diffraction peak 1 and the characteristic diffraction peak 2 satisfies 0.33°≤Δθ₁≤0.53°.

In some embodiments, the positive electrode active material includes lithium iron phosphate.

In some embodiments, when the electrochemical device is in the fully discharged state, the X-ray diffraction pattern of the positive electrode plate has a characteristic diffraction peak 3 at the diffraction angle 2θ ranging from 19.8° to 21.8°.

In some embodiments, a peak position difference between the characteristic diffraction peak 3 and the characteristic diffraction peak 1 satisfies 2°≤Δθ₂≤3°.

In some embodiments, based on a mass of the positive electrode active material, a mass percentage of the additive in the positive electrode active material is 3% to 20%. Limiting the amount of the additive within the above range can improve the initial charge gram capacity and initial coulombic efficiency of the electrochemical device.

In some embodiments, the positive electrode active layer includes element M, the element M includes at least one of Al, Nb, Mg, Ti, Ce, W, Ga, Zr, W, Y, V, Na, Sr, Mo, Cr, Sn, or La, and based on a mass of the positive electrode active layer, a mass percentage of the element M is 0.03% to 3.5%. The element M can inhibit metal dissolution, stabilize the structure of the positive electrode active material, improve the diffusion of lithium ions, and improve the cycling performance and high-temperature storage performance of the electrochemical device.

In some embodiments, based on the mass of the positive electrode active layer, a mass percentage of the element M is 0.3% to 1.5%.

In some embodiments, the electrolyte includes an electrolyte additive, the electrolyte additive includes at least one of sulfur-oxygen double bond compound, vinylene carbonate, or fluoroethylene carbonate, and based on a mass of the electrolyte, a mass percentage of the electrolyte additive is 0.001% to 10%. The electrolyte additive can stabilize the original morphology and structure of the positive electrode active material, and form a dense interface protective film on the surface of the positive electrode plate, improving the stability of the positive electrode material, reducing the interface impedance of the positive electrode, and further improving the cycling performance of the electrochemical device. In some embodiments, based on the mass of the electrolyte, the mass percentage of the electrolyte additive is 0.01% to 5%.

In some embodiments, the sulfur-oxygen double bond compound includes at least one of 1,3-propane sultone (PS), 1,3-propylene sultone (PES), or ethylene sulfate (DTD).

In some embodiments, the positive electrode active material includes aluminum element, and based on a mass of the positive electrode active material, a mass percentage of the aluminum element is C% and a mass percentage of vinylene carbonate (VC) in the electrolyte is D%, and C/D satisfies 0.03≤C/D≤0.5. Adding the aluminum element further stabilizes the structure of the positive electrode active material. VC can form a stable CEI film on the positive electrode interface. Controlling the mass percentages of the aluminum element and VC to satisfy the above relation can further stabilize the structure of the positive electrode active material, improving the high-temperature storage performance and cycling performance of the electrochemical device.

In some embodiments, the additive particles are of a layered structure, and its surface has steps with a width of 1 nm to 1000 nm. As the manganese-containing compound additive of a layered structure is added to the positive electrode active material, the active ions consumed for forming the CEI during the initial charge of the electrochemical device can be replenished. This is conducive to improving the cycling and storage performance of the electrochemical device and can also provide a diffusion pathway for lithium ions, increasing the charge-discharge capacity of the positive electrode active material, thereby further improving the rate performance, high-temperature storage performance, and cycling performance of the electrochemical device.

In some embodiments, an average particle size of the additive is F in a range of 5 µm to 40 µm. Controlling the average particle size of the additive within the above range can increase the charge-discharge capacity of the positive electrode active material and improve the high-temperature storage and cycling performance of the electrochemical device.

According to another aspect of this application, this application relates to an electronic device including the electrochemical device according to any one of the foregoing embodiments.

In this application, the manganese-containing additive is added to the positive electrode active material, and when the electrochemical device is in the fully discharged state, the X-ray diffraction pattern of the positive electrode plate has the characteristic diffraction peak 1 at the diffraction angle 2θ ranging from 17.5° to 19.5°. The added manganese-containing additive can replenish lithium ions consumed for forming a CEI film during the initial charge of the positive electrode active material, providing a diffusion pathway for the lithium ions, and facilitating quick intercalation and deintercalation of lithium ions. And the additive has a low voltage platform, helping the lithium ions to slowly intercalate back during cycling and storage, thereby increasing the capacity of the positive electrode active material, and significantly improving the cycling performance and high-temperature storage performance of the electrochemical device.

### DESCRIPTION OF DRAWINGS

FIG. 1 is an XRD pattern of a positive electrode plate of an electrochemical device being in a fully discharged state according to Example 1-1.
FIG. 2 is an XRD pattern of a positive electrode plate of an electrochemical device being in a fully discharged state according to Comparative example 1-1.
FIG. 3(a) and FIG. 3(b) are SEM images of a positive electrode active material being in a fully discharged state according to Example 1-1.

### DESCRIPTION OF EMBODIMENTS

The following describes this application in detail. It should be understood that the terms used in the specification and the appended claims should not be interpreted as being limited to their general and dictionary meanings, but should be interpreted based on the meanings and concepts corresponding to the technical aspects of this application, as the inventors are allowed to appropriately define the terms for the best explanation. Therefore, the descriptions shown in the implementation solutions described in the specification are merely specific examples for illustrative purposes and are not intended to show all technical aspects of this application. It should be understood that various alternative equivalents and variations can be made to them at the time of filing this application.

In specific embodiments and claims, a list of items connected by the terms "one of", "one piece of", and "one kind of" or other similar terms may mean any one of the listed items. For example, if items A and B are listed, the phrase "one of A and B" means only A or only B. In another example, if items A, B, and C are listed, the phrase "one of A, B, and C" means only A, only B, or only C. The item A may include a single element or a plurality of elements. The item B may include a single element or a plurality of elements. The item C may include a single element or a plurality of elements.

In the description of specific embodiments and claims, a list of items preceded by the terms "at least one of", "at least one piece of", "at least one kind of" or other similar terms may mean any combination of the listed items. For example, if items A and B are listed, the phrase "at least one of A and B" means only A, only B, or A and B. In another example, if items A, B, and C are listed, the phrase "at least one of A, B, or C" means only A, only B, only C, A and B (excluding C), A and C (excluding B), B and C (excluding A), or all of A, B, and C. The item A may include a single element or a plurality of elements. The item B may include a single element or a plurality of elements. The item C may include a single element or a plurality of elements.

In addition, quantities, ratios, and other values are sometimes presented in the format of range in this specification. It should be understood that such format of range is used for convenience and simplicity and should be flexibly understood as including not only values explicitly designated as falling within the range but also all individual values or sub-ranges covered by the range as if each value and sub-range are explicitly designated.

### I. Electrochemical device

According to an aspect of this application, this application relates to an electrochemical device, including a positive electrode plate, a negative electrode plate, and an electrolyte. The positive electrode plate includes a positive electrode active layer, the positive electrode active layer includes a positive electrode active material, and the positive electrode active material includes an additive. During charge/discharge of the electrochemical device, when the electrochemical device is in a fully discharged state, an X-ray diffraction (XRD) pattern of the positive electrode plate has a characteristic diffraction peak 1 at a diffraction angle 2θ ranging from 17.5° to 19.5°, and the additive includes manganese element. The characteristic diffraction peak 1 is the characteristic diffraction peak of the additive. The additive can replenish lithium ions consumed for forming a cathode-electrolyte interface (CEI) on the positive electrode during the initial charge of the positive electrode active material, helping to improve the cycling performance and high-temperature storage performance of the electrochemical device, providing a diffusion pathway for the lithium ions, and facilitating quick intercalation and deintercalation of lithium ions. And the additive has a low voltage platform (for example, a 3.9V platform), helping the lithium ions to slowly intercalate back during cycling and storage of the electrochemical device, thereby increasing the charge-discharge capacity of the positive electrode active material.

In some embodiments, the additive includes a manganese-containing compound of a layered structure. In some embodiments, the manganese-containing compound includes at least one of LiMn₂O₃, Li₂MnO₃, or LiMnO₂.

In some embodiments, the positive electrode active material includes lithium manganese oxide, when the electrochemical device is in the fully discharged state, the X-ray diffraction pattern of the positive electrode plate further has a characteristic diffraction peak 2 at the diffraction angle 2θ ranging from 17.5° to 19.5°, and a peak position difference between the characteristic diffraction peak 1 and the characteristic diffraction peak 2 satisfies 0.33°≤Δθ₁≤0.53°.

In some embodiments, the positive electrode active material includes lithium iron phosphate, when the electrochemical device is in the fully discharged state, the X-ray diffraction pattern has a characteristic diffraction peak 3 at the diffraction angle 2θ ranging from 19.8° to 21.8°, and a peak position difference between the characteristic diffraction peak 3 and the characteristic diffraction peak 1 satisfies 2°≤Δθ₂≤3°*.*

In some embodiments, based on a mass of the positive electrode active material, a mass percentage of the additive is 3% to 20%. In some embodiments, based on a mass of the positive electrode active material, a mass percentage of the additive is 3%, 4%, 6%, 8%, 10%, 12%, 14%, 16%, 18%, 20%, or in a range defined by any two of these values. When the amount of the additive is too low, the initial charge gram capacity of the electrochemical device prepared from it is reduced. When the amount of the additive is too high, the initial coulombic efficiency of the electrochemical device prepared from it is reduced. This is mainly because the additive has a high initial charge gram capacity, which can compensate the Li⁺ consumed for forming the CEI film during the initial charge of lithium manganese oxide. However, during the initial discharge, only part of the Li in the additive can intercalate back. Through research, limiting the amount of the additive in the foregoing range significantly improves both the initial charge gram capacity and the initial coulombic efficiency of the electrochemical device. In some embodiments, based on a mass of the positive electrode active material, a mass percentage of the additive is 3% to 15%. In this case, the electrochemical device has a high initial charge gram capacity and coulombic efficiency.

In some embodiments, a single-surface coating of the positive electrode active layer weighs 100 mg to 500 mg/1540.25 mm², where based on the mass of the positive electrode active layer, a mass percentage of the positive electrode active material is 94% to 98%.

In some embodiments, the electrolyte includes an electrolyte additive, the electrolyte additive includes at least one of sulfur-oxygen double bond compound, vinylene carbonate (VC), or fluoroethylene carbonate (FEC), and based on a mass of the electrolyte, a mass percentage of the electrolyte additive is 0.001% to 10%. In some embodiments, based on a mass of the electrolyte, a mass percentage of the additive is 0.001%, 2%, 3%, 4%, 5%, 6%, 7%, 8%, 9%, 10%, or in a range defined by any two of these values. In some embodiments, the sulfur-oxygen double bond compound includes at least one of 1,3-propane sultone (PS), 1,3-propylene sultone (PES), or ethylene sulfate (DTD). Different electrolyte additives have different improvement effects on the battery system. VC and FEC can serve as CEI film-forming additives and form more stable CEI films. VC and FEC can also enhance the flexibility of the CEI film and reduce the impedance of the positive electrode interface. The sulfur-oxygen double bond compound can form a protective film on the interfaces of the positive and negative electrodes, reducing side reactions between the positive and negative electrodes and the electrolyte, and the internal transmission impedance of the battery, thus helping to improve the normal/high-temperature cycling performance and the high-temperature storage performance of the battery. The foregoing electrolyte additive stabilizes the original morphology and structure of the positive electrode active material and form a dense interface film on the surface of the positive electrode plate. This improves the stability of the positive electrode material and reduces side reactions, lowering the impedance of the material, thus improving the cycling performance of the battery. In some embodiments, the mass percentage of the electrolyte additive is 0.01% to 5%. In this case, the electrolyte additive can form a flexible protective film on the positive and negative electrode interfaces, reducing the interface impedance, effectively improving the normal/high-temperature cycling performance and high-temperature storage performance of the electrochemical device.

In some embodiments, the positive electrode active layer includes element M, and M includes at least one of elements Al, Nb, Mg, Ti, Ce, W, Ga, Zr, W, Y, V, Na, Sr, Mo, Cr, Sn, or La. In some embodiments, based on the mass of the positive electrode active layer, a mass percentage of the element M is 0.03% to 3.5%. In some embodiments, based on the mass of the positive electrode active layer, the mass percentage of the element M is 0.03%, 0.05%, 0.1%, 0.2%, 0.4%, 0.6%, 0.8%, 1.0%, 1.2%, 1.4%, 1.6%, 1.8%, 2.0%, 2.2%, 2.4%, 2.6%, 2.8%, 3.0%, 3.2%, 3.4%, 3.5%, or in a range defined by any two of these values. The element M can stabilize the structure of the positive electrode active material, reduce phase changes, inhibit the dissolution of transition metal, facilitate the diffusion of lithium ions, and improve the cycling performance and high-temperature storage performance of the electrochemical device. However, when the amount of the element M is too large, the internal lattice of the positive electrode active material can expand, damaging the structural stability of the material and affecting the cycling performance of the electrochemical device. In some embodiments, based on the mass of the positive electrode active layer, the mass percentage of the element M is 0.03% to 1.5%. Within this amount range, the element M can effectively inhibit metal dissolution, enhance the diffusion of lithium ions, and improve the cycling performance and high-temperature storage performance of the electrochemical device.

In some embodiments, the positive electrode active material includes aluminum element, and based on a mass of the positive electrode active layer, a mass percentage of the aluminum element is C% and a mass percentage of VC in the electrolyte is D%, satisfying 0.03≤C/D≤0.5. Adding the aluminum element further stabilizes the structure of the positive electrode active material. VC can form a stable CEI film on the positive electrode interface. Controlling the mass percentages of the aluminum element and VC to satisfy the above relation can further stabilize the structure of the positive electrode active material, improving the high-temperature storage performance and cycling performance of the electrochemical device.

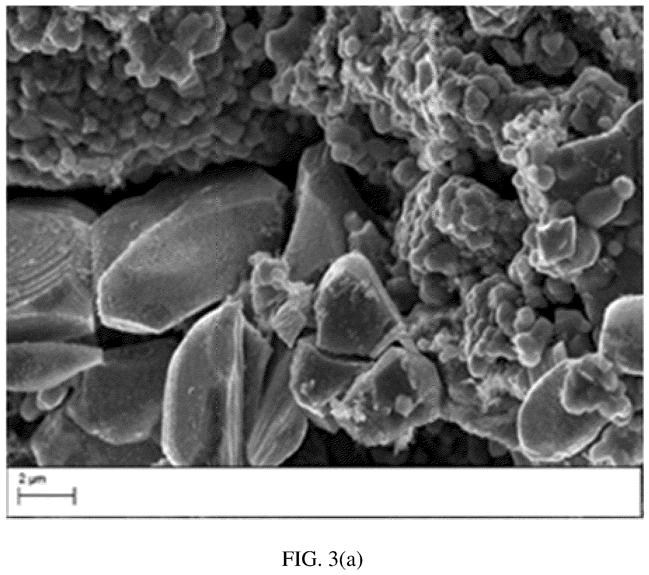

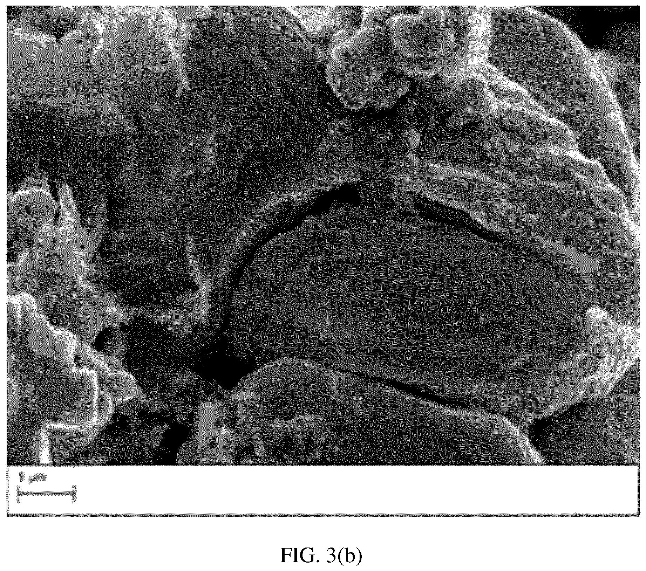

In some embodiments, an average particle size of the additive is F in a range of 5 µm to 40 µm, and a surface of particles of the additive has steps with a width of 1 nm to 1000 nm. Referring to FIGs. 3(a) and 3(b), the larger particles are particles of the additive, which is of a layered structure having steps with a width of 1 nm to 1000 nm on the surface. Adding the manganese-containing compound being of a layered structure to the positive electrode active material significantly improves the capacity, rate performance, high-temperature storage performance, and cycling performance of the electrochemical device. This is mainly because the manganese-containing compound being of a layered structure replenishes lithium ions consumed for forming the CEI during the initial charge of the electrochemical device, helping to improve the cycling performance and storage performance of the electrochemical device, and can provide a diffusion pathway for the lithium ions, facilitating quick intercalation and deintercalation of lithium ions. The manganese-containing compound has a low voltage platform (for example, a 3.9V platform), helping the lithium ions to slowly intercalate back during cycling and storage, thereby increasing the charge-discharge capacity of the positive electrode active material.

According to another aspect of this application, this application relates to an electronic device including the electrochemical device according to any of the foregoing embodiments.

### II. Preparation of electrochemical device

A method for preparing the electrochemical device in this application is described in detail using a lithium-ion battery as an example.

Preparation of negative electrode: A negative electrode active material, a conductive agent, a binder, and a thickener are dispersed in a solvent system in a specific mass ratio, fully stirred and mixed to uniformity, then applied to a negative electrode current collector, followed by drying and cold calendering, to obtain a negative electrode plate.

For example, the negative electrode active substance may be at least one selected from the group consisting of natural graphite, artificial graphite, mesocarbon microbeads (MCMB), hard carbon, soft carbon, silicon, silicon-carbon composite, SiO, Li-Sn alloy, Li-Sn-O alloy, Sn, SnO, SnO₂, lithium titanate Li₄Ti₅O₁₂ with a spinel structure, Li-Al alloy, and metallic lithium. The conductive agent may be at least one selected from the group consisting of graphite, superconductive carbon, acetylene black, carbon black, Ketjen black, carbon dots, carbon nanotubes, graphene, and carbon nanofibers. The binder may be at least one selected from the group consisting of styrene-butadiene rubber (SBR), polyvinylidene fluoride (PVDF), polytetrafluoroethylene (PTFE), polyvinyl butyral (PVB), water-based acrylic resin (water-basedacrylic resin), and carboxymethyl cellulose (CMC). The thickener may be carboxymethyl cellulose (CMC).

The negative electrode current collector may be made of a material such as a metal foil material or a porous metal plate, for example, a foil material or porous plate made of metal such as copper, nickel, titanium, or iron or alloys thereof, such as copper foil.

### Preparation of positive electrode:

### Preparation of additive in positive electrode active material:

(a) Place Mn₃O₄ in a corundum crucible, heat it to 500°C at a rate of 5°C/min in an air atmosphere, and maintain the constant temperature for 1 h to obtain anhydrous Mn₃O₄.
(b) Weigh anhydrous Mn₃O₄ and LiOH in a molar ratio of 1.05:1 for Li:Mn, add nano Al₂O₃ in a mass ratio of 0.015:1 for elements Al:Mn, and mix them using a mixing device for 8 h, to obtain a mixture precursor.
(c) Place the mixture precursor in the corundum crucible, introduce a nitrogen gas at a rate of 2 m³/h, heat the precursor to 940°C at a rate of 5°C/min, and maintain the constant temperature for 10 h, followed by natural cooling to a room temperature, to obtain an additive.

The positive electrode active material (lithium manganese oxide (LiMn₂O₄), lithium iron phosphate, or other positive electrode active material), and the foregoing additive, conductive agent, and binder are mixed in a certain weight ratio, added to a solvent, and stirred well, to obtain a slurry. The slurry is evenly applied to a positive electrode current collector, an aluminum foil, and dried at 90°C, to obtain an initial positive electrode plate. The initial positive electrode plate is subjected to processes such as cold calendering and cutting to obtain a positive electrode plate.

In some embodiments, the conductive agent improves the conductivity of the positive electrode active layer by providing a conductive pathway to the active substance. The conductive agent may include at least one of the following: acetylene black, Ketjen black, natural graphite, carbon black, carbon fiber, metal powder, or metal fibers (for example, copper, nickel, aluminum, or silver), but the examples of the conductive agent are not limited thereto. In some embodiments, the amount of the conductive agent can be adjusted properly. Based on a total of 100 parts by weight of the positive electrode active substance, conductive agent, and positive electrode binder, the amount of the conductive agent ranges from 1 part by weight to 30 parts by weight.

In some embodiments, an example of the solvent includes but is not limited to N-methylpyrrolidone, acetone, or water. In some embodiments, the amount of the solvent can be adjusted properly.

In some embodiments, the binder improves the bonding performance between the positive electrode active substance particles as well as between the positive electrode active substance particles and the current collector. An example of the positive electrode binder includes but is not limited to one or more of polyvinylidene fluoride (PVDF), polytetrafluoroethylene (PTFE), polyvinyl butyral (PVB), ethylene-vinyl acetate copolymer (EVA), and polyvinyl alcohol (PVA). Based on a total of 100 parts by weight of the active substance, conductive agent, and positive electrode binder, the amount of the positive electrode binder ranges from 1 part by weight to 30 parts by weight.

In some embodiments, the current collector has a thickness in the range of 3 µm to 20 µm, but the disclosed content is not limited thereto. The current collector is conductive and does not cause adverse chemical changes in the manufactured battery. An example of the current collector includes copper, stainless steel, aluminum, nickel, titanium, or alloy (for example, copper-nickel alloy), but is not limited thereto. In some embodiments, the surface of the current collector may include fine irregularities (causing, for example, different surface roughness) to enhance the adhesion of the current collector surface to the active substance. In some embodiments, the current collector may be used in various forms, its example including film, sheet, foil, mesh, porous structure, foam, or nonwoven material, but the disclosed content is not limited thereto.

The separator in some embodiments of this application is not particularly limited. The separator includes a polyolefin microporous film and a coating (applied to the surface of the polyethylene microporous film). The separator is a single-layer or multi-layer polyolefin microporous film formed by one or more of polyethylene (PE), ethylene-propylene copolymer, polypropylene (PP), ethylene-butene copolymer, ethylene-hexene copolymer, or ethylene-methyl methacrylate copolymer. The coating includes inorganic ceramic particles, which are selected from one or more of SiO₂, Al₂O₃, CaO, TiO₂, ZnO₂, MgO, ZrO₂, or SnO₂.

According to some embodiments of this application, the electrolyte includes a non-aqueous organic solvent and lithium salt. The non-aqueous organic solvent may include carbonate, carboxylic acid ester, ether compound, sulfone compound, or other aprotic solvent. An example of a carbonate solvent includes dimethyl carbonate, diethyl carbonate, methyl ethyl carbonate, methyl propyl carbonate, ethyl propyl carbonate, dipropyl carbonate, ethylene carbonate, propylene carbonate, butylene carbonate, bis(2,2,2-trifluoroethyl) carbonate, or the like. An example of an ether compound solvent includes ethylene glycol dimethyl ether, diethylene glycol dimethyl ether, tetraethylene glycol dimethyl ether, dibutyl ether, tetrahydrofuran, 2-methyltetrahydrofuran, bis(2,2,2-trifluoroethyl) ether, 1,3-dioxane, 1,4-dioxane, or the like. An example of a sulfone compound solvent includes ethyl vinyl sulfone, methyl isopropyl sulfone, isopropyl sec-butyl sulfone, sulfolane, or the like.

According to some embodiments of this application, the non-aqueous organic solvent in the electrolyte may be a single non-aqueous organic solvent or a mixture of multiple non-aqueous organic solvents. When a mixed solvent is used, the mixing ratio can be controlled based on the desired performance of the electrochemical device.

According to some embodiments of this application, the lithium salt in the electrolyte includes or is selected from at least one of organic lithium salt or inorganic lithium salt. The lithium salt includes or is selected from lithium hexafluorophosphate (LiPF₆), lithium tetrafluoroborate (LiBF₄), lithium bis(oxalate)borate (LiB(C₂O₄)₂,LiBOB), lithium difluoro(oxalate)borate (LiBF₂(C₂O₄),LiDFOB), lithium hexafluoroantimonate (LiSbF₆), lithium hexafluoroarsenate (LiAsF₆), lithium perfluorobutylsulfonate (LiC₄F₉SO₃), lithium perchlorate (LiClO₄), lithium aluminate (LiAlO₂), lithium tetrachloroaluminate (LiAlCl₄), Lithium bis(perfluorosulfonyl)imide (LiN(CₓF₂ₓ₊₁SO₂)(C_{y}F_{2y+1}SO₂), where x and y are natural numbers), lithium chloride (LiCl), and lithium fluoride (LiF).

Preparation of electrolyte: In an argon atmosphere glove box with a water amount of less than 10 ppm, ethylene carbonate (EC), propylene carbonate (PC), diethyl carbonate (DEC), ethyl propionate (EP), and propyl propionate (PP) are mixed to uniformity in a mass ratio of 1:1:1:1:1. Then, the fully dried lithium salt LiPF₆ is dissolved in the above non-aqueous solvent to obtain a base electrolyte, where a mass percentage of LiPF₆ is 12.5%.

The positive electrode, the separator, and the negative electrode are stacked in order, with the separator sandwiched between the positive and negative electrodes for separation, and wound to obtain a jelly roll. The jelly roll obtained by winding is placed in an outer package, which, with an electrolyte injected therein, is then sealed, followed by processes such as formation, degassing, and trimming, to obtain a lithium-ion battery.

### III. Electronic device

This application provides an electronic device, including the electrochemical device as described above.

According to some embodiments of this application, the electronic device includes but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, or a large household battery.

### III. Specific examples

The following further describes this application in detail with reference to examples using a lithium-ion battery as an example. However, it should be understood that the following examples are only exemplary, and embodiments of this application are not limited thereto.

### Performance test methods

### Test method for XRD

A fully discharged lithium-ion battery was taken and disassembled to obtain a positive electrode plate. The positive electrode plate was placed on a sample stage of an XRD tester (model Bruker, D8) and subjected to XRD test at a scanning speed of 2°/min and a scanning angle range of 10° to 90°, to obtain an XRD diffraction pattern. The corresponding diffraction peaks were read, and their peak positions and half-peak widths were recorded.

### Test for particle morphology

The lithium-ion battery was disassembled to obtain a positive electrode plate. A scanning electron microscope (JEOL JSM-6360LV) was used to capture an SEM image of the positive electrode plate obtained by disassembling the lithium-ion battery, so as to observe the particle morphology of a positive electrode active material.

### Test for average particle size

The lithium-ion battery was disassembled to obtain the positive electrode plate. The scanning electron microscope was used to capture the SEM image of the positive electrode plate obtained by disassembling the lithium-ion battery, so as to observe the particles of the positive electrode active material. Image analysis software was used to randomly select 30 particles from the SEM image and an area of each particle was calculated. Assuming the particles were spherical, the particle size D (diameter) of each particle was calculated according to the formula: D=2×(S1/π)^{1/2}, where S1 was the area of the particle. The arithmetic mean of the particle sizes of the 30 particles was then taken to obtain the average particle size of the particles.

### Test method for element amount

The positive electrode plate was obtained by disassembling the lithium-ion battery and was cleaned with DMC. A positive electrode active layer of the cleaned positive electrode plate was scraped off with a spatula and dissolved in a mixed solvent (for example, 0.4 g of the positive electrode active layer was dissolved in a mixed solvent of 10 mL of aqua regia (a mixture of nitric acid and hydrochloric acid in a ratio of 1:1) and 2 ml of HF). The solution was diluted to 100 mL, and then an ICP analyzer was used to test a mass percentage of element Al, Nb, Mg, Ti, Ce, W, Ga, Zr, W, Y, V, Na, Sr, Mo, Cr, Sn, or La in the solution (based on the mass of the positive electrode active layer).

### Test for capacity of lithium-ion battery: gram capacity (mAh g⁻¹) during a first discharge cycle at 25°C and 0.2C

Four lithium-ion batteries prepared from the positive electrode materials shown in the examples and comparative examples were taken as a set. At a constant temperature of 25°C, the batteries were charged at a constant current of 0.5C (that is, the current value required for fully discharging the theoretical capacity in 2 h) to 4.2 V, charged at a constant voltage, and discharged at a constant current of 0.2C to 2.8 V. The initial discharge capacity at 0.2C was calculated as the capacity of the battery.

### Cycling performance test for lithium-ion battery

Four lithium-ion batteries prepared from the positive electrode materials shown in the examples and comparative examples were taken as a set. The four lithium-ion batteries were repeatedly charged and discharged through the following steps, and the discharge capacity retention rates of the lithium-ion batteries were calculated.

First, in an environment of 25/45°C, a first charge and discharge cycle was performed. The batteries were charged at a constant current of 0.5C to a voltage of 4.2 V, charged at a constant voltage, and discharged at a constant current of 1C to 2.8 V. The discharge capacities during the first cycle were recorded. Then, the charge and discharge cycle was repeated for 1500/400 times, and the discharge capacities at the 1000th/500th cycle were recorded. Cycling capacity retention rate at 25°C=(discharge capacity of the 1500th cycle/discharge capacity of the 1st cycle)×100% Cycling capacity retention rate at 45°C=(discharge capacity of the 400th cycle/discharge capacity of the 1st cycle)×100%

### High-temperature storage test of lithium-ion battery

Four lithium-ion batteries prepared with the positive electrode materials shown in the examples and comparative examples were taken as a set. In an environment of 60°C, the batteries were charged at a constant current of 0.5C to 4.2 V, charged at a constant voltage, and discharged at a constant current of 1C to 2.8 V. The discharge capacity was recorded as the pre-storage capacity. The batteries were charged at a constant current of 0.5C to 3.99 V, charged at constant voltage until the current dropped below 0.05C, and then stored in a 60°C oven for 14 D. Next, they were discharged at a constant current of 1C to 2.8 V, charged at a constant current of 0.5C and a constant voltage until the upper limit voltage reached 4.2 V, and discharged at a constant current of 1C to 2.8 V. The discharge capacity was recorded as the post-storage capacity. High-temperature storage capacity retention rate at 60°C=post-storage capacity/pre-storage capacityx100%.

### A. Examples 1-1 to 1-8 and Comparative example 1-2

### Preparation method in Example 1-1

### Step (1):

(a) MnOOH was placed in a corundum crucible and heated to 500°C at a rate of 5°C/min in an air atmosphere, with the constant temperature maintained for 1 h, to obtain anhydrous Mn₃O₄.
(b) Anhydrous Mn₃O₄ and LiOH were weighed in a molar ratio of 1.05:1 for Li:Mn, nano Cr₂O₃ was added in a mass ratio of 0.015:1 for elements Cr:Mn, and they were mixed using a mixing device for 8 h, to obtain a mixture precursor.
(c) The mixture precursor was placed in the corundum crucible, a nitrogen gas was introduced at a rate of 2 m³/h, the precursor was heated to 940°C at a rate of 5°C/min, and the constant temperature was maintained for 10 h, followed by natural cooling to a room temperature, to obtain an additive. An average particle size of the additive was 18.9 micrometers, and the surface of the additive particles had steps with a width of 600 nm to 700 nm, as shown in FIG. 3(a) and FIG. 3(b).

Step (2): Lithium manganese oxide (LiMn₂O₄) (the average particle size of lithium manganese oxide was 2.7 microns) as the positive electrode active material, the foregoing additive, conductive carbon black (Super P), carbon nanotubes (CNT), and polyvinylidene fluoride (PVDF) were mixed in a weight ratio of 90:5:1.8:1.2:2, and added with N-methylpyrrolidone (NMP) as a solvent, so as to prepare a slurry stirred evenly, with a solid content of 0.75. The slurry was then evenly applied to both surfaces of the positive electrode current collector: an aluminum foil, and dried at 90°C to obtain an initial positive electrode plate. The initial positive electrode plate was subjected to processes such as cold calendering and cutting to obtain a positive electrode plate.

Negative electrode: A negative electrode active material: graphite, conductive carbon black (Super P), and polyvinylidene fluoride (PVDF) were mixed in a weight ratio of 97:1.0:2.0 and added with N-methylpyrrolidone (NMP) as a solvent, so as to prepare a slurry stirred evenly, with a solid content of 0.8. The slurry was evenly applied to a negative electrode current collector, a copper foil, and dried at 80°C, to obtain an initial negative electrode plate. The initial negative electrode plate was subjected to processes such as cold calendering and cutting to obtain a negative electrode plate.

Electrolyte: In an argon atmosphere glove box with a water amount of less than 10 ppm, ethylene carbonate (EC), propylene carbonate (PC), diethyl carbonate (DEC), ethyl propionate (EP), and propyl propionate (PP) were mixed to uniformity in a mass ratio of 1:1:1:1:1. Then, the fully dried lithium salt LiPF₆ was dissolved in the above non-aqueous solvent to obtain a base electrolyte, where a mass percentage of LiPF₆ was 12.5wt%.

### Separator: A PE porous polymerized film was used as a separator.

The positive electrode, the separator, and the negative electrode were stacked in order, with the separator sandwiched between the positive and negative electrodes for separation, wound, and placed in an outer package, which was then sealed after injection of the prepared electrolyte therein, followed by processes such as formation, degassing, and trimming, to obtain a lithium-ion battery.

Examples 1-2 to 1-5 and Example 1-1 differ only in additive amount (the additive amount is adjusted on a basis of a total weight percentage of an additive and lithium manganese oxide being 95%, that is, the total weight of the additive and lithium manganese oxide accounting for 95% of the weight of a positive electrode active material). Example 1-6 and Example 1-1 differ in use of lithium iron phosphate instead of lithium manganese oxide (an average particle size of lithium iron phosphate is 0.4 microns). Examples 1-7 and 1-8 and Example 1-6 differ only in additive amount (the additive amount is adjusted on a basis of a total weight percentage of an additive and lithium iron phosphate being 95%, that is, the total weight of the additive and lithium iron phosphate accounting for 95% of the weight of a positive electrode active material). A positive electrode active material of Comparative example 1-1 contains only lithium manganese oxide, and a positive electrode active material of Comparative example 1-2 contains only lithium iron phosphate. For details, refer to Table 1 below, which provides differences in the composition and performance of electrochemical devices in Examples 1-1 to 1-8 and Comparative examples 1-1 and 1-2.

**Table 1**

| Example | Mass percentage of additive (%) | Diffraction peak 1 | Peak position difference Δθ₁ | Peak position difference Δθ₂ | Initial discharge gram capacity at 25°C and 0.2C(mAh g⁻¹) | Cycling capacity retention rate at 25°C | Cycling capacity retention rate at 45°C | High-temperature storage capacity retention rate at 60°C |
|---|---|---|---|---|---|---|---|---|
| Example 1-1 | 5 | 18.08 | 0.43 | / | 106 | 72.6% | 69.1% | 82.6% |
| Example 1-2 | 8 | 18.12 | 0.45 | / | 108 | 75.3% | 72.4% | 84.7% |
| Example 1-3 | 10 | 18.19 | 0.47 | / | 108.5 | 77.1% | 74.8% | 86.1% |
| Example 1-4 | 20 | 18.21 | 0.52 | / | 110.2 | 70.9% | 68.7% | 81.2% |
| Example 1-5 | 30 | 18.27 | 0.65 | / | 110.7 | 68.1% | 67.4% | 80.8% |
| Example 1-6 | 5 | 18.05 | / | 2.38 | 140.2 | 80.9% | 79.7% | 85.2% |
| Example 1-7 | 8 | 18.15 | / | 2.23 | 143.7 | 83.1% | 81.9% | 87.8% |
| Example 1-8 | 10 | 18.23 | / | 2.38 | 145.6 | 84.5% | 83.4% | 88.5% |
| Comparative example 1-1 | / | / | 18.71 | / | 100.1 | 67.1% | 65.5% | 78.5% |
| Comparative example 1-2 | / | / | / | 20.2 | 140.3 | 78.2% | 73.5% | 83.6% |

| | | | | | | | | |
|---|---|---|---|---|---|---|---|---|
| Note: The diffraction peak 1 is a characteristic diffraction peak at a diffraction angle 2θ in an X-ray diffraction pattern of the positive electrode plate in the fully discharged state. The peak position difference Δθ₁ is a peak position difference between the diffraction peak 1 and the diffraction peak 2, and the peak position difference Δθ₂ is a peak position difference between the diffraction peak 1 and the diffraction peak 3, where the peak position difference should be understood as an absolute value. There is no peak for additive in Comparative example 1-1, so the peak position difference Δθ₁ in the above table actually refers to the diffraction peak 2 at the diffraction angle 2θ in the X-ray diffraction pattern of the positive electrode plate prepared from lithium manganese oxide in the fully discharged state. There is no peak for additive in Comparative example 1-2, so the peak position difference Δθ₂ in the above table actually refers to the diffraction peak 3 at the diffraction angle 2θ in the X-ray diffraction pattern of the positive electrode plate prepared from lithium iron phosphate in the fully discharged state. | | | | | | | | |

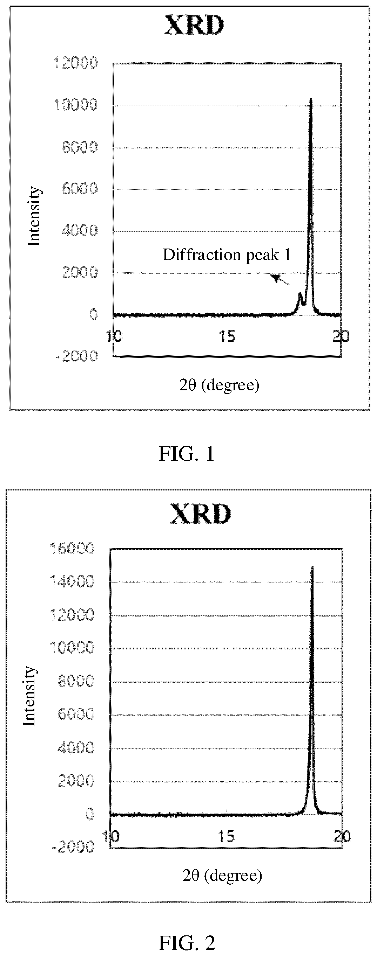

Referring to Table 1 and FIGs. 1 and 2, it can be known that the positive electrode active layers of Examples 1-1 to 1-8 include an additive, and when the electrochemical device is in the fully discharged state, the X-ray diffraction (XRD) pattern of the positive electrode plate has a characteristic diffraction peak 1 at the diffraction angle 2θ ranging from 17.5° to 19.5°. Through comparison of the lithium manganese oxide positive electrode active material between Examples 1-1 to 1-5 and Comparative example 1-1, and of the lithium iron phosphate positive electrode active material between Examples 1-6 to 1-8 and Comparative example 1-2, it can be seen that the electrochemical performance (initial discharge gram capacity at 25°C and 0.2C, capacity retention rate after 1500 cycles at 25°C, 400 cycles at 45°C, and high-temperature storage capacity retention rate at 60°C) of the examples with the additive is significantly improved compared to the corresponding comparative examples without the additive. This is mainly because the additive can replenish Li consumed for forming SEI during the initial charge of the positive electrode active material, helping to improve the cycling and storage performance of the lithium-ion battery, and can provide a diffusion pathway for the lithium ions, facilitating quick intercalation and deintercalation of lithium ions. The additive has a low voltage platform, helping the lithium ions to slowly intercalate back during cycling and storage, thereby increasing the capacity of the positive electrode active material.

### B. Example 1-1 and Examples 2-1 to 2-10

Examples 2-1 to 2-10 and Example 1-1 differ only in the amount of element Al in the positive electrode active layer and amount of VC in electrolyte in Examples 2-1 to 2-7. When aluminum element is added to the additive, Examples 2-2 to 2-7 and Example 1-1 differ in step (b) of preparation process: Anhydrous Mn₃O₄ and LiOH are weighed in a molar ratio of 1.05:1 for Li:Mn, nano Al₂O₃ is added in a ratio for elements Al:Mn, and they are mixed using a mixing device for 8 h, obtaining a mixture precursor, so as to prepare additive containing the aluminum element. The specific amount is shown in Table 2. Table 2 below shows differences in composition and performance of the electrochemical devices in Examples 1-1 and Examples 2-1 to 2-7.

**Table 2**

| Example | C | D | C/D | Cycling capacity retention rate at 25°C | Cycling capacity retention rate at 45°C | High-temperature storage capacity retention rate at 60°C |
|---|---|---|---|---|---|---|
| Example 1-1 | / | / | / | 72.60% | 69.10% | 82.60% |
| Example 2-1 | / | 1.5 | / | 75.50% | 72.30% | 86.30% |
| Examples 2-2 | 0.35 | / | / | 74.40% | 72.00% | 83.80% |
| Examples 2-3 | 0.09 | 1.5 | 0.06 | 76.00% | 73.90% | 85.40% |
| Examples 2-4 | 0.35 | 1.5 | 0.23 | 77.30% | 75.20% | 85.70% |
| Examples 2-5 | 0.68 | 1.5 | 0.45 | 76.80% | 74.70% | 86.30% |
| Examples 2-6 | 0.38 | 1.5 | 0.25 | 78.10% | 76.10% | 86.20% |
| Examples 2-7 | 0.18 | 1.5 | 0.12 | 77.80% | 74.60% | 86.10% |
| Examples 2-8 | 0.51 | 1.5 | 0.34 | 78.10% | 76.60% | 87.60% |

| | | | | | | |
|---|---|---|---|---|---|---|
| Note: C is the mass percentage of the aluminum element based on the mass of the positive electrode active layer; D is the mass percentage value of VC in the electrolyte. | | | | | | |

Referring to Table 2, it can be seen that adding the aluminum element to the positive electrode active material can further improve the cycling performance and high-temperature storage performance of the lithium-ion battery. For example, compared to Example 1-1 without the aluminum element, Examples 2-1 to 2-7 with the aluminum element show significant improvements in capacity retention rates after 1500 cycles at 25°C, 400 cycles at 45°C, and high-temperature storage capacity retention rate at 65°C. This is mainly because the aluminum element can improve the stability of the crystal cells when lithium ions intercalate or deintercalate, and stabilize the crystal structure, allowing for a more stable structure of the positive electrode active material and improving the cycling performance of the lithium-ion battery. In this application, it has been found through research that limiting the type and the amount of elements to 0.1% to 3.5% allows the lithium-ion battery to have better performance. According to embodiments of this application, when 0.2≤A/B≤1.5 or 0.03≤C/D≤0.5, the cycling performance and high-temperature storage performance of the electrochemical device are better. Adding the aluminum element further stabilizes the structure of the positive electrode active material. VC can form a stable CEI film on the positive electrode interface. Controlling the mass percentages of the aluminum element and VC to satisfy the above relation can further stabilize the structure of the positive electrode active material and protect the positive electrode interface, improving the high-temperature storage performance and cycling performance of the lithium-ion battery. In addition, it should be understood that the aluminum element may be added to the additive, lithium manganese oxide, or both of them, to achieve a crystal structure stabilizing the material, improving the structural stability of the material when lithium ions intercalate or deintercalate, thus improving the cycling performance of the lithium-ion battery. When aluminum element was added to the additive, the difference from step (b) in Example 1-1 is that anhydrous Mn₃O₄ and LiOH are weighed in a molar ratio of 1.05:1 for Li:Mn, nano Al₂O₃ is added in a molar ratio for Al:Mn, and they are mixed using a mixing device for 8 h, to obtain a mixture precursor. Based on conventional techniques in the field, those skilled in the art add the aluminum element to lithium manganese oxide.

### C. Example 1-1 and Examples 3-1 to 3-8

Examples 3-1 to 3-8 and Example 1-1 differ only in the type and amount of electrolyte additive.

Preparation of electrolyte in Example 3-1 is used an example for description: In an argon atmosphere glove box with a water amount of less than 10 ppm, ethylene carbonate (EC), propylene carbonate (PC), diethyl carbonate (DEC), ethyl propionate (EP), and propyl propionate (PP) are mixed to uniformity in a mass ratio of 1:1:1:1:1. Then, the fully dried lithium salt LiPF₆ is dissolved in the above non-aqueous solvent to obtain an electrolyte, where a mass percentage of LiPF₆ is 12.5%. 1.5% of 1,3-propane sultone (PS) (based on the mass of the electrolyte) is added to the electrolyte.

The preparation methods of electrolyte in Examples 3-2 to 3-8 are basically the same as that in Example 3-1, with the difference only in the type and amount of the electrolyte additive. For example, in Example 3-2, except for adding 1.5% of vinylene carbonate (VC) to the electrolyte, steps of Example 3-1 are repeated.

Table 3 below shows differences in the composition and performance of electrochemical device between Example 1-1 and Examples 3-1 to 3-8.

**Table 3**

| Example | Electrolyte additive and mass percentage (%) | | Cycling capacity retention rate at 25°C | High-temperature storage at 60°C |
|---|---|---|---|---|
| Example 1-1 | / | / | 72.60% | 82.60% |
| Example 3-1 | 1,3-propane sultone (PS) | 1.5 | 73.60% | 84.80% |
| Example 3-2 | Vinylene carbonate (VC) | 1.5 | 74.40% | 84.20% |
| Example 3-3 | Vinylene carbonate (VC) | 3 | 74.10% | 84.70% |
| Example 3-4 | 1,3-propane sultone (PS)+vinylene carbonate (VC) | 1.5+1.5 | 75.50% | 85.10% |
| Example 3-5 | Fluoroethylene carbonate (FEC) | 1.5 | 73.90% | 84.20% |
| Example 3-6 | 1,3-propane sultone (PS)+fluoroethylene carbonate (FEC) | 1.5+1.5 | 75.70% | 85.30% |
| Example 3-7 | 1,3-propane sultone (PS)+1,3-propylene sultone (PES) | 1.5+1.5 | 75.50% | 85.60% |
| Example 3-8 | 1,3-propane sultone (PS)+ethylene sulfate (DTD) | 1.5+1.5 | 76.10% | 86.20% |

From the examples in Table 3, it can be seen that adding the electrolyte additive can further improve the performance of the electrochemical device. For example, as at least one of 1,3-propane sultone (PS), vinylene carbonate (VC), 1,3-propylene sultone (PES), fluoroethylene carbonate (FEC), or ethylene sulfate (DTD) is added to the electrolyte, the high-temperature storage capacity retention rates after 1500 cycles at 25°C and at 60°C of the electrochemical device are both improved. This is mainly because different electrolyte additives have various improving effects on the battery system. VC and FEC can serve as CEI film-forming additives to form a more stable CEI film. VC and FEC can also enhance the flexibility of the CEI film and reduce the impedance of the positive electrode interface. The compound containing sulfur-oxygen double bond can form a protective film on the positive and negative electrode interfaces, reducing side reactions between the positive and negative electrode interfaces and the electrolyte, and lowering the internal transmission impedance of the lithium-ion battery. This helps to improve the normal and high-temperature cycling performance and the high-temperature storage performance of the battery. The additive described in this technology stabilizes the original morphology and structure of the positive electrode active material and enables the formation of a dense interface film on the positive electrode surface, improving the stability of the positive electrode material, reducing side reactions, and lowering the impedance of the material, thereby improving the cycling performance of the lithium-ion battery.

References to "some embodiments", "some of the embodiments", "an embodiment", "another example", "examples", "specific examples", or "some examples" in this specification mean the inclusion of specific features, structures, materials, or characteristics described in the embodiment or example in at least one embodiment or example of this application. Therefore, descriptions in various places throughout this specification, such as "in some embodiments", "in the embodiments", "in an embodiment", "in another example", "in an example", "in a specific example", or "examples", do not necessarily refer to the same embodiment or example of this application. In addition, a specific feature, structure, material, or characteristic herein may be combined in any appropriate manner in one or more embodiments or examples.

Although illustrative embodiments have been demonstrated and described, persons skilled in the art should understand that the foregoing embodiments are not to be construed as limiting this application, and that some embodiments may be changed, replaced, and modified without departing from the spirit, principle, and scope of this application.

## Claims

1. An electrochemical device, comprising a positive electrode plate, a negative electrode plate, and an electrolyte, wherein,
the positive electrode plate comprises a positive electrode active layer;
the positive electrode active layer comprises a positive electrode active material;
the positive electrode active material comprises an additive;
wherein during charge/discharge of the electrochemical device, when the electrochemical device is in a fully discharged state, an X-ray diffraction pattern of the positive electrode plate has a characteristic diffraction peak 1 at a diffraction angle 2θ ranging from 17.5° to 19.5°, and
the additive comprises manganese element.

2. The electrochemical device according to claim 1, wherein the positive electrode active material comprises lithium manganese oxide.

3. The electrochemical device according to claim 2, wherein when the electrochemical device is in the fully discharged state, the X-ray diffraction pattern of the positive electrode plate further has a characteristic diffraction peak 2 at the diffraction angle 2θ ranging from 17.5° to 19.5°.

4. The electrochemical device according to claim 3, wherein a peak position difference Δθ₁ between the characteristic diffraction peak 2 and the characteristic diffraction peak 1 satisfies 0.33°≤Δθ₁≤0.53°.

5. The electrochemical device according to claim 1, wherein the positive electrode active material comprises lithium iron phosphate.

6. The electrochemical device according to claim 5, wherein when the electrochemical device is in the fully discharged state, the X-ray diffraction pattern of the positive electrode plate has a characteristic diffraction peak 3 at the diffraction angle 2θ ranging from 19.8° to 21.8°.

7. The electrochemical device according to claim 6, wherein a peak position difference Δθ₂ between the characteristic diffraction peak 3 and the characteristic diffraction peak 1 satisfies 2°≤Δθ₂≤3°.

8. The electrochemical device according to claim 1, wherein based on a mass of the positive electrode active material, a mass percentage of the additive is 3% to 20%, preferably 3% to 15%.

9. The electrochemical device according to claim 1, wherein the positive electrode active layer comprises element M, the element M comprises at least one of Al, Nb, Mg, Ti, Ce, W, Ga, Zr, Y, V, Na, Sr, Mo, Cr, Sn, or La, and based on a mass of the positive electrode active layer, a mass percentage of the element M is 0.03% to 3.5%, preferably 0.3% to 1.5%.

10. The electrochemical device according to claim 1, wherein the electrolyte comprises an electrolyte additive, the electrolyte additive comprises at least one of sulfur-oxygen double bond compound, vinylene carbonate, or fluoroethylene carbonate, and based on a mass of the electrolyte, a mass percentage of the electrolyte additive is 0.001% to 10%, preferably 0.01% to 5%.

11. The electrochemical device according to claim 1, wherein the positive electrode active layer comprises aluminum element, and based on a mass of the positive electrode active layer, a mass percentage of the aluminum element is C (%) and a mass percentage of vinylene carbonate in the electrolyte is D%, satisfying 0.03≤C/D≤0.5.

12. The electrochemical device according to claim 1, wherein the additive satisfies at least one of the following:
(1) an average particle size of the additive is F in a range of 5 µm to 40 µm; and
(2) a surface of particles of the additive has steps with a width of 1 nm to 1000 nm.

13. An electronic device, comprising the electrochemical device according to any one of claims 1 to 12.
